# EUROPEAN PATENT APPLICATION

(11) **EP 2 712 213 A1**
(43) Date of publication of application: **26.03.2014**
(21) Application number: 12802331.4
(22) Date of filing: 28.05.2012
(51) Int. Cl.: H04W 4/02

(54) **METHOD, SYSTEM, TERMINAL, AND SERVER FOR IMPLEMENTING MOBILE AUGMENTED REALITY SERVICE**

(30) Priority: 24.06.2011 CN 201110173559; 16.09.2011 CN 201110290310
(71) Applicant: ZTE Corporation, Shenzhen, Guangdong 518057 (CN)
(72) Inventor: HUANG, Cheng, Shenzhen Guangdong 518057 (CN)
(74) Representative: Tischner, Oliver
(86) International application number: PCT/CN2012/076175
(87) International publication number: WO 2012/174974

(57) **Abstract**

A method for implementing a mobile Augmented Reality (AR) service is disclosed. The method includes: a mobile AR server selects an AR target and/or AR content; and the mobile AR server delivers the AR target and/or the AR content to a mobile AR client. A system for implementing a mobile AR service, a mobile AR client and a mobile AR server are disclosed. The disclosure solves the problem of difficult application development, a high service deployment cost and an inconsistent user experience of an existing AR solution, and facilitates the development of an AR market greatly. The method for implementing a mobile AR service of the disclosure adapts to recognition of different types of AR targets and acquisition of AR contents, has desirable expansibility, and provides a uniform service experience for user's in different application scenarios.

## Description

### TECHNICAL FIELD

The disclosure relates to technology for implementing a mobile Augmented Reality (AR) service, and in particular to a method and system for implementing a mobile AR service, a mobile AR terminal and a mobile AR server.

### BACKGROUND

Along with maturation and development of intelligent terminals and technology of mobile Internet, AR technology, once limited in a laboratory, starts to go into the public's view. Large amounts of Internet/mobile Internet AR applications based on the technologies of image recognition and terminal positioning begin to emerge, referred to as Mobile Augmented Reality (Mobile AR) applications, which causes a considerable concern in the industry and gradually becomes a technological research hotspot.

The research and application of the Mobile AR technology apply virtual AR information to a real world, changing a way that a user observes a surrounding world, i.e., changing from a traditional WEB page browse-and-inquiry mode based on text input to a brand new mode of capturing hotspots and browsing augmented information in real time based on camera shooting.

A Mobile AR user can achieve an AR service experience while shooting a surrounding scene with a mobile terminal, such as smart phone, predominantly including the following service scenarios: an Augmented Reality Application (AR Application) running on the mobile terminal captures an AR target (AR Target), such as Point of Interest (POI) related to a geographic position, deployed by an AR service provider based on the user's current position, acquires an AR content (AR Content), including words, images, voices and videos, based on the user's choice, and finally makes a fusion display of the acquired AR content and a surrounding real scene shot by a terminal camera in real time in combination with geographic fingerprint information such as latitude and longitude, and orientation of the user terminal to gain an extraordinary AR experience.

For an AR solution in a current market, different AR service providers each develop AR applications independently, and different AR applications are implemented based on different AR technologies. Current AR technologies primarily include the followings: AR target recognition technology, AR content acquisition technology, AR content display technology, etc. As such, an AR application developer has to use different technologies for AR applications developed by different AR service providers, which certainly increases the difficulty in developing the AR application. An AR user has to choose to install different AR application running environments based on the differences of their ordered AR services, which is very inconvenient for the user to change his terminal. This is because the respective AR applications published by the AR service providers cannot incompatible with each other, the user has to reinstall the running environments of all AR applications as long as the user changes his terminal, which certainly will prevent the market popularity of the AR applications.

In the current AR solution, since the respective AR applications of the AR service providers are incompatible with each other, the AR applications therefore cannot also be sold online intensively, which may drastically reduce subscription user population of the AR service providers. In addition, an AR service provider not only needs to deploy an AR service server, but also needs to bear a task of designing AR contents alone, which also increases a service operational cost of the AR service provider.

In summary, the traditional AR service providers carry out their AR services independently according to their respective implementation technologies, so that not only the AR application market is cut apart, but also great inconvenience is brought to a wide variety of users, which has currently become an important factor that prevents the development of the AR service market.

### SUMMARY

In view of this, the disclosure is desired to provide a method and system for implementing a mobile Augmented Reality (AR) service, a mobile AR terminal and a mobile AR server, which can strengthen the effect of a user experience.

To this end, a technical solution of the disclosure is implemented as follows.

A method for implementing a mobile AR service includes:
a mobile AR server searches for an AR target, selects and acquires AR content according to a request received from a mobile AR client or a received push request related to delivery of the AR target and/or the AR content; and
the mobile AR server delivers the AR target and/or the AR content to the mobile AR client.

Preferably, the process that the mobile AR server searches for an AR target may include:
the AR target is searched for according to a parameter in the request of the mobile AR client or the push request, and/or user AR personalization and context.

Preferably, the selecting and acquiring AR content may include:
the AR target is searched for, and AR content corresponding to the AR target is acquired simultaneously.

Preferably, the mobile AR server may search for the AR target based on at least one of followings: a user position, a user setting and a feature of the AR target, wherein the user setting at lease includes a search radius and/or a search category of the AR target.

Preferably, the process that the mobile AR server selects and acquires AR content may include:
the AR content is searched for and acquired according to a parameter in the request of the mobile AR client or the push request, and/or user AR personalization and context.

Preferably, the mobile AR server may search for and acquire the AR content based on at least one of followings:
an identifier of the AR content, a feature of the AR content, an identifier of the AR target, a user terminal capability, a deployment rule of the AR content and a strategy for controlling access of the AR content.

Preferably, the process that the mobile AR server selects and acquires AR content may include:
the mobile AR server acquires the AR content from an AR content server, or acquires the AR content from a local cache.

Preferably, the receiving a push request related to delivery of an AR target and/or AR content may include:
the mobile AR server receives the push request related to delivery of the AR target and/or the AR content according to a push setting of the AR target and/or the AR content.

Preferably, the push setting of the AR target and/or the AR content may include:
a user context, wherein the user context includes: a user position, a terminal present status; and/or a preset pushing time interval.

Preferably, the method may further include:
the mobile AR server filters the AR target and/or the AR content according to user AR personalization and context.

Preferably, the user AR personalization and context may at least include one of followings:
a type of the AR target, a category of the AR target, a feature of the AR target, a type of the AR content, a user position and a terminal capability.

Preferably, the method may further include:
the mobile AR server aggregates the AR target and/or the AR content according to at least one of followings:
   a position of the AR target and/or the AR content position, a direction of the AR target and/or the AR content direction, and a correlation between AR targets or between AR contents.

Preferably, the method may further include:
the mobile AR server triggers, according to user AR personalization and context, a service logic of a third-party application server to acquire an additional service content of a third-party value-added application, wherein
the user AR personalization and context includes at least one of followings:
   a user position, a service access time and a service category of the third-party value-added application.

Preferably, the method may further include:
the mobile AR server instructs the mobile AR client to cancel or replace an AR target and/or AR content previously acquired.

Preferably, the instruction may be issued in response to the request of the mobile AR client or the push request sent to the mobile AR client; and
the mobile AR server sends a request of cancelling or replacing the AR target and/or the AR content previously acquired to the mobile AR client according to a request from an AR content server.

Preferably, the process that the mobile AR server delivers the AR target and/or the AR content to the mobile AR client may include:
the AR target and/or the AR content are/is returned in response to the request of the mobile AR client; or
an AR target and/or the AR content are/is actively pushed to the AR client.

Preferably, the method may further include:
the mobile AR server selects and delivers followings to the mobile AR client:
   the AR target and/or the AR content;
   a reference of the AR target and/or the AR content; and
   a no-information instruction.

Preferably, the method may further include:
the mobile AR server pauses or resumes the delivery of the AR target and/or the AR content to the mobile AR client according to the user AR personalization and context, wherein
the user AR personalization and context includes at least one of followings:
   a status change of a user terminal, and a position change of a user.

Preferably, the method may further include:
the mobile AR server receives a management request from an AR content server, and updates AR target information and/or AR content information corresponding to the AR content management request.

Preferably, the AR content management request may at least include:
a request of managing association between the AR target and AR content, or a request of managing publishing of the AR content, or a request of managing a deployment rule of the AR content, or a request of notifying subscription of an AR measure report.

Preferably, the method may further include:
the mobile AR server receives AR measure data and a user feedback reported by the mobile AR client, and creates an AR measure report; and
the mobile AR server sends the AR measure report to an AR content server according to a subscription-notification-relation of the AR measure report, as well as user AR personalization and context.

A mobile AR server includes:
an AR content/target selection function, configured to: search for an AR target, select and acquire AR content according to a request received from a mobile AR client or a push request related to delivery of the AR target and/or the AR content;
an AR content/target delivery function, configured to:
   in responding to the request of the mobile AR client, deliver the AR content and/or the AR target to the mobile AR client; or
   initiate a request of delivering the AR target and/or the AR content to the mobile AR client;
an AR content/target management function, configured to store and manage deployment information of the AR target, publish information of the AR content, a caching strategy of the AR content and the AR content cached in the mobile AR client;
an AR measure processing function, configured to collect AR measure data from the mobile AR client and interactive feedbacks between a user and the AR content, add known information of the mobile AR server into the collected AR measure data, and process the AR measure data and other related data to generate an integrated report; and
an AR personalization and context management function, configured to collect and manage a user personalization preference and user context information.

Preferably, the mobile AR server may further include a fourth interface provided to the AR content server; and
the mobile AR server may provide the AR content through the fourth interface, and access functions opened by the mobile AR server, wherein the functions include: requesting for association/disassociation between the AR content and the AR target, requesting to publish an accessible status of the AR content, setting a deployment rule of the AR content, accessing an anonymous feedback related to user interaction and AR measure.

A mobile AR terminal includes: a terminal capability component, a mobile AR client, an AR application and a support service client, wherein the mobile AR client is configured to: access user/terminal personalization and context information, request the mobile AR server to search for an AR target, select and acquire AR content, and control a fusion display of the AR target and/or the AR content with a real scene shot by the terminal capability component.

Preferably, the mobile AR terminal may further include:
an AR content/target acquisition function, configured to request the mobile AR server to acquire the AR content and/or the AR target according to a request of the AR application;
an AR content/target display function, configured to provide an AR content display mechanism according to the request of the AR application;
a user interaction support function, configured to support interaction of a user with the AR target and related AR content on a display screen of a terminal;
an AR measure processing function, configured to: collect the interactions between the user and the AR content, as well as a user feedback on an AR content, and report AR measure data and the user feedback to the mobile AR server; and
a user/terminal data management function, configured to collect and manage information related to a user AR service setting and a terminal status.

Preferably, a first interface may further be provided between the mobile AR client and the AR application; and
the first interface is configured to: access the AR target and/or the AR content provided by the mobile AR client, and access other AR service functions provided by the mobile AR client, wherein the other AR service functions at least include: reporting AR measure data to the mobile AR client.

Preferably, a second interface may be provided between the mobile AR client and the mobile AR server;
the mobile AR server may, through the second interface,
   receive a request of searching for the AR target from the mobile AR client, and return a response to the mobile AR client;
   receive a request of acquiring the AR content from the mobile AR client, and return a response to the mobile AR client;
   receive a request of reporting an AR measure and a user feedback from the mobile AR client, and return a response to the mobile AR client;
   receive a request of setting or updating a user preference from the mobile AR client, and return a response to the mobile AR client; and
   inform the mobile AR client to cancel AR content locally cached in the mobile AR client; and
the mobile AR client may, through the second interface,
   request the mobile AR server to find the AR target, request the mobile AR server to acquire the AR content, request to set or update a user preference setting, and request to report the AR measure and the user feedback to the mobile AR server.

Preferably, a third interface may be provided between the mobile AR client and the mobile AR server;
the mobile AR client may receive, through the third interface, the AR content and/or the target pushed by the mobile AR server; and
the mobile AR server may, through the third interface, directly push the AR content and/or the AR target to the mobile AR client, or push a notification of indirectly acquiring the AR content and/or the AR target to the mobile AR client.

A mobile AR system includes:
a mobile AR client, configured to: access a user terminal capability, request a mobile AR server to search for the AR target, acquire the AR content, and control display of the AR target and/or the AR content;
a mobile AR server, configured to: search for the AR target according to a request received from the mobile AR client or a push request related to delivery of the AR target and/or the AR content, select and acquire the AR content, and deliver the AR target and/or the AR content to the mobile AR client; and
an AR content server, configured to provide storage and management of the AR content.

Preferably, that the mobile AR server searches for the AR target, and selects and acquires the AR content may include:
the mobile AR server filters the AR target and/or the AR content; and/or
the mobile AR server aggregates the AR target and/or the AR content.

Preferably, the mobile AR server may provide AR content publishing management for the AR content server; and
the mobile AR server may provide an AR measure processing report to the mobile AR client.

The disclosure solves the problems of difficult application development, high service deployment costs and inconsistent user experience in the existing AR solution and facilitates the development of the AR market greatly. The mobile AR system (server, client) of the disclosure develops an open API for AR applications, and provides an underlying capability support for the AR service, including target searching, content acquisition, etc, thereby reducing the difficulty of the AR application development. The mobile AR server provides an AR content publishing management interface for an AR content server, thus reducing the AR service deployment cost. The method for implementing a mobile AR service of the disclosure adapts to recognition of different types of AR targets and acquisition of AR contents, has desirable expansibility, and provides a uniform service experience for users in different application scenarios.

### BRIEF DESCRIPTION OF THE DRAWINGS

Fig. 1 is a schematic diagram of a composition structure of a mobile AR system according to the disclosure;
Fig. 2 is a schematic diagram illustrating logical functions of a mobile AR client 120 according to the disclosure;
Fig. 3 is a schematic diagram illustrating logical functions of a mobile AR server 200 according to the disclosure;
Fig. 4 is a schematic diagram of a composition structure of an AR content/target selection function 210 according to the disclosure;
Fig. 5 is a schematic diagram of a composition structure of an AR content/target management function 230 according to the disclosure;
Fig. 6 is a flowchart of a method for implementing a mobile AR service according to the disclosure;
Fig. 7 is a flowchart of a method for implementing a mobile AR service according to application example 1 of the disclosure;
Fig. 8 is a flowchart of a method for implementing a mobile AR service according to application example 2 of the disclosure;
Fig. 9 is a flowchart of a method for implementing a mobile AR service according to application example 3 of the disclosure;
Fig. 10 is a flowchart of a method for implementing a mobile AR service according to application example 4 of the disclosure; and
Fig. 11 is a flowchart of a method for implementing a mobile AR service according to application example 5 of the disclosure.

### DETAILED DESCRIPTION

In order to make purposes, technical solutions and advantages of the disclosure clearer and easier to understand, the disclosure is further elaborated below with reference to embodiments and the drawings.

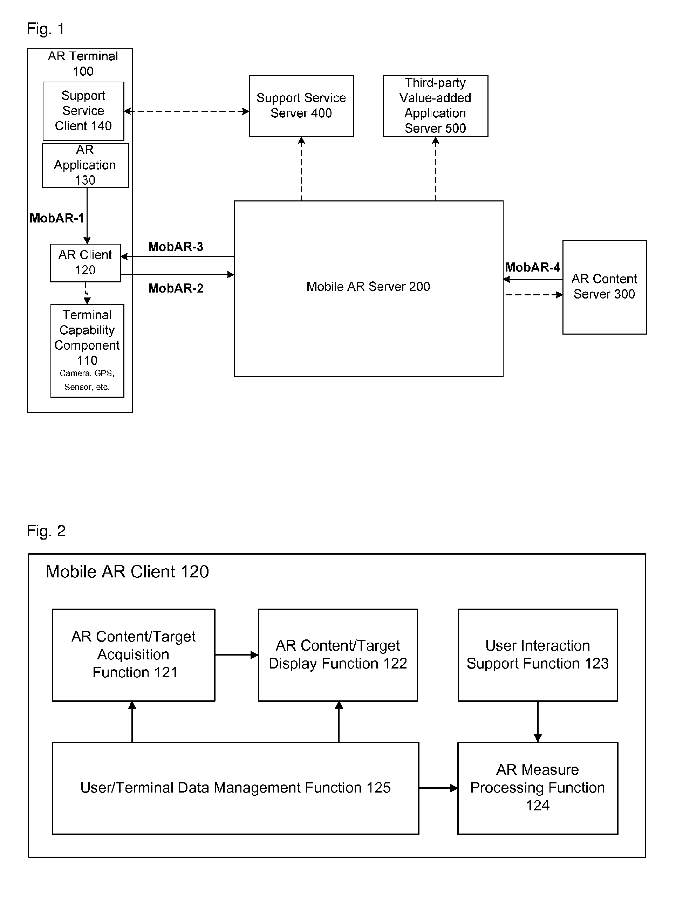

Fig. 1 is a schematic diagram of a composition structure of a system for implementing a mobile AR service according to the disclosure. As shown in Fig. 1, the system for implementing a mobile AR service according to the disclosure includes a mobile AR terminal 100, a mobile AR server 200, an AR content server 300, a support service server 400 and a third-party value-added application server 500. The mobile AR terminal 100, the mobile AR server 200 and the AR content server 300 are basic core network elements for implementing a mobile AR service of the disclosure, and the support service server 400 and the third-party value-added application server 500 are configured to support and optimize the mobile AR service of the disclosure. The mobile AR server 200, the AR content server 300, the support service server 400 and the third-party value-added applications server 500 are network-side network elements. The mobile AR terminal 100 is an application terminal for a mobile user to acquire AR content, and the mobile AR terminal 100 receives an input instruction from a user and sends an AR content and/or AR target request to the mobile AR server 200. The mobile AR server 200 searches for an AR target, selects and acquires AR content; and delivers the AR target and/or the AR content to the mobile AR terminal 100. The mobile AR server 200 selects and acquires the AR content, and filters, aggregates and manages the AR content. The AR content server 300 stores the AR content and publishes the AR content.

Functions implemented by various network elements described above and how to interact among the various network elements will be elaborated hereinafter.

The mobile AR terminal 100 is a mobile terminal with an AR service function that is used by a user. Besides providing the basic communication function, the mobile AR terminal 100 can also provide an AR service experience for the user, and may also include the following functional modules: a terminal capability component 110, a mobile AR client 120, an AR application 130, and a support service client 140. The mobile AR client 120 and the AR application 130 are connected via a MobAR-1 interface.

The terminal capability component 110, responsible for implementing collection and display of information required for the mobile AR service, includes: a camera; a display screen; a Global Positioning System (GPS) module, compass, sensors and the like; and Radio Frequency Identification (RFID) reader, a two-dimensional code scanner, an image identification module, a computer vision processing module and other modules. The camera is configured to shoot real scene information (Camera View) of a physical world around the user in real time. A camera with a display-and-memory function can also be used to cache shot real scene information in real time. The display screen is configured to present an AR content View (AR View) of the real scene information shot by the camera under modification and rendering of the AR content for the user. In particular, the display screen mainly presents performing a render on an AR target corresponding to AR content acquired from an AR content server 230 on a network side, and presents it to the user in front of the mobile AR terminal 100. That is, the terminal capability component 110 needs to locate AR target to be specially displayed in the real scene information shot by the camera, uses the AR content corresponding to the acquired AR target to render the reality target, and then presents the rendered reality target to the user. The GPS module and the GPS satellite communication provide position information (such as latitude and longitude information) of a terminal in real time. The compass and the sensor are configured to collect a user terminal status, including: a camera orientation, an included angle with the ground, etc. The Radio Frequency Identification (RFID) reader, a two-dimensional code scanner, an image identification module, a computer vision processing module and other modules implement scan, input, extraction and the like on a feature of a backup AR target.

Fig. 2 is a schematic diagram of composition of logic functions for implementing a mobile AR client 120 according to the disclosure. As shown in Fig. 2, the mobile AR client 120 is a functional entity on a terminal side of a mobile AR service system, and is responsible for providing a mobile AR service supporting capability for an AR application on an AR terminal.

The mobile AR client 120 accesses a real-time status of a mobile AR terminal 100 collected by a terminal capability component 110 (for example including a GPS, a compass, a sensor and the like), requests a mobile AR server 200 to acquire an AR target and/or AR content, and controls the fusion display of the acquired AR content and the real scene shot by the camera. The mobile AR client 120 returns requested information to an AR application, and provides a user interaction support, an AR measure report and other capabilities.

The mobile AR client 120 includes the following functional modules:
an AR content/target acquisition function 121, responsible for receiving a request of an AR application 130 running on the mobile AR terminal 100, associating a mobile AR server 200, requesting to search for an AR target, and acquiring relevant AR content, including:
   1) a request of searching for an AR target or a request of acquiring AR content is received from the AR application 130;
   2) the mobile AR server 200 is requested to acquire the following information, or the following information pushed by the mobile AR server 200 is received:
an AR target and/or AR content; and
a reference of the AR target and/or AR content;
   3) the AR target or the AR content from the mobile AR server 200 is cached;
   4) the cached AR target or AR content is managed (such as updated, cancelled); and
   5) the requested AR target or AR content is returned to the AR application 130.

The AR content/target acquisition function 121 can acquire the AR target or AR content in the following manners:
PULL mode: the AR content/target acquisition function 121 actively requests the mobile AR server 200 to search for an AR target or acquire AR content; and
PUSH mode: the mobile AR server 200 pushes an AR target or AR content to the AR content/target acquisition function 121 according to a user AR service setting.

An AR content/target display function 122 is responsible for controlling the fusion display of the AR content acquired by the AR content /target acquisition function 121 and a real scene shot by a camera on a display screen 112 according to a real-time status of the mobile AR terminal 100 collected by the terminal capability component 110.

### User Interface Support

A user interface function is configured to enable a user interface to display an AR tag and AR content.

The user interface function provides at least the following user interaction supports:
selecting the AR tag and the AR content;
clicking to get the details of the selected AR tag and AR content;
clicking to interact with relevant information; and
subscribing a consumption mode for the displayed AR content.

The relevant information is used to dynamically to change a track behavior of the AR target.

Collection of measure data and a user feedback under the control of a strategy of a service provider are enabled or disenabled.

Selection of a setting and a parameter is specified and updated, such as searching for a radius of the AR target and/or AR content, and determining a category of the type of the AR target, a push setting of the delivery of the AR content and a trigger condition of a third-party VAS call.

Relevant information used for the AR content selection is allowed or is not allowed.

A user interaction support function 123 is configured to implement human-computer interaction with a user, such as accepting an instruction related to AR content and/or an AR target input by the user. The user interaction support function 123 is further configured to: display an AR tag and AR content; provide a selection of the AR tag and the AR content to the user; enable the user to acquire the details of the selected AR tag and AR content; perform interaction on relevant information with the user; and enable the user to subscribe a consumption mode of the displayed AR content; and so on.

An AR measure processing function 124 is responsible for contacting the mobile AR server 200 and performing a function related to collection and report of an AR measure according to a feedback of the AR application 130 running on the mobile AR terminal 100, including:
1) AR measure data fed back by the AR application 130 are received, which includes:
   user's operations to a displayed AR marker and AR content on a display screen (such as selecting and viewing detail information); and
   a AR content access history including: an access time, an attribute of the accessed AR content (such as an identifier of the AR content, and a position of the AR target);
2) other measure information known by the mobile AR client 120 is added into the AR measure data fed back by the AR application 130, which includes:
   an AR content access history, such as a timestamp, an attribute of the AR content (a position, an identifier, a description etc. related to the AR target);
   the AR target or AR content management information (such as update, deletion) cached by the AR content/target acquisition function 121; and
   status information (success or failure) of return of the requested AR target or AR content to the AR application 130;
3) a feedback of an AR user is collected, such as a score for the AR content and the like;
4) the collected AR measure and user feedback are utilized to optimize a subsequent service, such as aggregating the AR content and preferentially displaying the content that is frequently accessed;
5) the accuracy of the collected AR measure data is verified, and the collected AR measure data are processed in accordance with a AR service setting or an operation strategy, which includes:
   inaccurate AR measure data are discarded before an AR measure report is reported to the mobile AR server 200; and
   the inaccurate AR measure data are included in the reported AR measure report; and
6) the AR measure report is reported to a mobile AR user/service/terminal reality server 200, which includes:
   a plurality of AR measure reports are reported according to different types of AR measure data; and
   the AR measure data are aggregated, and the AR measure report is reported.

A user/terminal data management function 125, which is responsible for managing information related to a mobile AR user and terminal, includes:
1) setting and managing a user personalization preference, such as an acquisition preference to the AR target and/or AR content, a display preference to the AR target and/or AR content;
2) collecting and processing the user context information, such as user's position information, AR terminal status information (such as an electric quantity of a terminal, a storage status); and
3) managing AR target or AR content caches.

An AR application 130 provides a terminal-side application program for implementing the mobile AR service, and accesses an underlying supporting capability of the AR service provided by a mobile AR client 120 via a mobile AR interface MobAR-1 of the disclosure, and on this basis provides different forms of AR service experiences, such as an AR multimedia advertisement application, an AR navigation application, and an AR game application.

A support service client 140, which provides client capability implementation of a support service required for implementation of the mobile AR service, includes:
a device management client, implementing communication between the device management client and a device management server to provide a device management function for an user mobile AR terminal based on a Device Management (DM) protocol;
an XML Document Management (XDM) client, implementing communication between an XDM client and an XDM server to provide a user preference and a service settings management function for the user AR service based on an XML Configuration Access Protocol (XCAP); and
a presence client, implementing communication between the presence client and a presence server (included in a support service server 400) to provide a presence information push function for the user mobile AR terminal based on a Session Initiation Protocol (SIP).

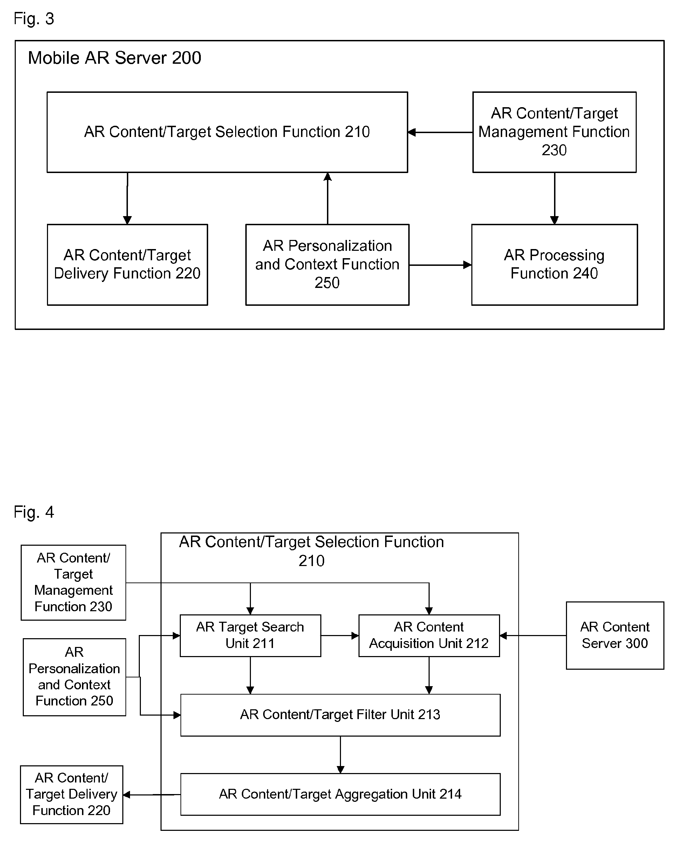

Fig. 3 is a schematic diagram of composition of logic functions for implementing a mobile AR serve 200 of the disclosure. As shown in Fig. 3, the mobile AR server 200 is a functional entity on a network side of a mobile AR service system, and is responsible for providing a user services such as the AR target and/or AR content publishing management, the AR target searching, the AR content acquisition selecting, the AR target and/or AR content delivering, the AR measure according to a request of a mobile AR client 120 and user AR personalization and context settings. The mobile AR server 200 mainly includes the following functional entities: an AR content/target selection function 210, an AR content/target selection function 220, an AR content/target management function 230, an AR measure processing function 240 and an AR personalization and context management function 250.

The AR content/target selection function 210 is responsible for searching for an AR target, selecting and acquiring AR content in the mobile AR server 200 according to a received request from a mobile AR client 120 or a push request related to delivery of the AR target and the AR content.

The AR content/target selection function 210 provides the following sub-functions:
1) acquiring the AR target and/or AR content;
2) filtering the AR target and/or AR content;
3) aggregating the AR target and/or AR content;
4) consumption presence to the AR target and/or AR content;
5) triggering a third-party value-added application; and
6) cancelling or replacing the AR target and/or AR content.

The AR content/target selection function 210 provides a service in the following cases:
1) the mobile AR server 200 receives a request of the mobile AR service sent by the mobile AR client 120, including: an AR target search request, and an AR content acquisition request; and
2) the mobile AR server 200 determines that a predetermined AR target and/or AR content push setting condition is already met, the condition including:
   a push time interval for the AR target and/or AR content expires, such as a particular moment of one day or one week; and
   a mobile AR user context matches a preset push condition, for example, a user entering a particular area, or a user presence status (Presence) indicating that a mobile AR terminal camera used thereby is in on-state.

(I) The AR content/target selection function 210 is responsible for selecting and acquiring an AR target and/or AR content according to a request of the mobile AR client 120, steps including:
   1) For an AR target search request, a search condition for the AR target is constructed according to an AR target search parameter, and AR personalization and context included in the AR target search request, and the AR target search request is sent to the AR content/target management function 230 to acquire a set of AR targets met the condition, in which the search parameter at least includes:
      position information of the mobile AR user, such as latitude and longitude;
      types of AR targets, such as POI (Point of Interest);
      search radiuses and search categories of the AR targets, for the POI, such as a building;
      features of AR targets, such as an open time and a price range;
      relation information between AR targets, such as being contained, containing, and adjoining; and
      multimedia contents such as images, videos, and audios.

      If the search parameter of the AR target is the user position information, the AR content/target selection function 210 determines, according to the user personalization preference and the user's current context in the AR personalization and context management function 250, whether to simultaneously acquire AR contents corresponding to a target that is relative close to the user position in the searched AR targets, so as to cache the AR contents by the mobile AR client 120. If yes, then the AR content/target selection function 210 requests to acquire the corresponding AR contents.
   2) For an AR content acquisition request, an AR content acquisition condition is constructed according to an AR content acquisition parameter, and AR personalization and context included in the AR content acquisition request, and the AR content acquisition request is sent to the AR content/target management function 230 to acquire a set of AR contents met the condition, in which the acquisition parameter at least includes:
      an identifier of the AR content, or an identifier associated with the AR target;
      a feature of the AR content, such as a media type, and a charge price;
      a deployment rule of the AR content; and
      an access control strategy of the AR content.

   If the mobile AR server 200 has locally cached the AR content, the AR content/target selection function 210 directly requests the AR content/target management function 230 to acquire the AR content; otherwise, the AR content/target selection function 210 requests a corresponding AR content server 300 to acquire the AR content;
(II) The AR content/target selection function 210 is responsible for selecting and acquiring an AR target and/or AR content according to a preset push condition in the AR personalization and context management function 250, steps including:
   1) For an AR target push request, an AR target search condition is constructed according to an AR target search parameter, and AR personalization and context included in the AR target push request, and the AR target search request is sent to the AR content/target management function 230 to acquire a set of AR targets met the condition;
   2) For an AR content push request, constructing an AR content acquisition condition is constructed according to an AR content acquisition parameter, and AR personalization and context included in the AR content push request, and an AR content acquisition request is sent to the AR content/target management function 230 to acquire a set of AR contents met the condition, in which the acquisition parameter at least includes:
      an identifier of the AR content, or an identifier associated with the AR target;
      a feature of the AR content, such as a media type, and a charge price;
      a deployment rule of the AR content; and
      an access control strategy of the AR content.

   If the mobile AR server 200 has locally cached the AR content, the AR content/target selection function 210 directly acquires the AR content; otherwise, the AR content/target selection function 210 requests a corresponding AR content server 300 to acquire the AR content;
(III) The AR content/target selection function 210 is responsible for filtering the acquired AR target and/or AR content, ways including:
   filtering the acquired AR target and/or AR content according to a user personalization preference in AR personalization and context management function 250, in which the personalized preference at least includes:
      types of the AR target, such as POI (Point of Interest);
      categories of AR targets, for POI, such as a building;
      user terminal capabilities, such as a screen resolution;
      features of AR targets, such as an open time and a price range; and
      types of AR contents, such as images, videos and audios; and
      filtering the acquired AR target and/or AR content according to a user's current context in the AR personalization and context management function 250, in which the user's current context at least includes:
         position information of the mobile AR user, such as latitude and longitude; and
         user terminal capabilities, such as a remaining storage space, a remaining electric quantity.
(IV) The AR content/target selection function 210 is responsible for aggregating the acquired AR target and/or AR content, ways including:
   aggregating the acquired AR target and/or AR content according to the own features of an AR target and/or AR content, in which the features at least include:
      a position of the AR target and/or AR content;
      a direction of the AR target and/or AR content; and
      a correlation between the AR target and/or AR content; and
      aggregating the acquired AR target and/or AR content according to the user personalization preferences in the AR personalization and context management function 250, in which the user personalization preferences at least include:
         an AR target and/or content access history, such as an access time.
(V) The AR content/target selection function 210 supports different consumption presence modes for the acquired AR target and/or AR content, modes including:
   instructing to display the AR target and/or AR content in a list mode; and
   instructing to display the AR target and/or AR content in a map mode.

   Through the above treatments, the AR content/target selection function 210 will return the following information:
   an AR target and/or AR content; and
   a reference of the AR target and/or AR content.

   If an AR target and/or AR content met the request condition fails to be acquired, a default AR target and/or default AR content will be returned, or an instruction of failing to acquire the AR target and/or AR content will be returned.
(VI) The AR content/target selection function 210 is responsible for triggering a service logic of a third-party value-added application server 500, and providing additional information for a mobile AR client 120, ways including:
   in foregoing steps, the AR content/target selection function 210 determines, according to the user personalization preference and the user's current context in the AR personalization and context management function 250, whether the service trigger condition of the third-party value-added application server 500 is met. If yes, the AR content/target select function 210 requests to trigger a third-party value-added application, and sends a service trigger request to the corresponding third-party value-added application server 500 to acquire the value-added service content provided by the third-party value-added application server 500.
(VII) The AR content/target selection function 220 is responsible for instructing the mobile AR client 120 to cancel or replace the AR target and/or AR content previously acquired, ways including:
   the AR content/target selection function 220 sends a request of cancelling or replacing the AR target and/or AR content previously acquired to the mobile AR client 120 according to a request of an AR content provider 300; and
   the AR content/target selection function 220 sends a request of cancelling or replacing the AR target and/or AR content previously acquired to the mobile AR client 120 according to a request of an AR content/target management function 230 inside a mobile AR server 200.
   The request may be included in a PULL mode via a response message, or be directly pushed and sent in a PUSH mode.

The AR content/target delivery function 220 is responsible for delivering the following information to the mobile AR client 120 in the mobile AR server 200:
an AR target and/or AR content;
a reference of the AR target and/or AR content; and
an instruction of failing to acquire the AR target and/or AR content.

The AR content/target delivery function 220 implements delivery service of the AR target and/or AR content by the following ways:
PULL mode: the AR content/target delivery function 220 delivers the AR target and/or AR content in response to a request of the mobile AR client 120; and
PUSH mode: the AR content/target delivery function 220 actively pushes the AR target and/or AR content to the mobile AR client 120.

The AR content/target delivery function 220 is responsible for providing pause and resume services of acquisition of the AR target and/or AR content for a mobile AR client 120, including:
pausing, according to a status change of the mobile AR terminal 100, delivery of the AR target and/or AR content that is being acquired by the mobile AR client 120, for example, electric quantity in the terminal is low, or the terminal loses communication network signals; and
resuming, according to a status change of the mobile AR terminal 100, to delivery of the AR target and/or AR content previously paused to the mobile AR client 120, for example, the terminal status that affects the delivery is recovered and the delivery condition is still met.

The AR content/target management function 230 is responsible for storing and managing information related to AR target deployment and AR content publishing in the mobile AR server 200, mainly including:
management of the AR target deployment information, at least including: the identifier of the AR target, the type, classification and description of the AR target, the identifier of the associated AR content, the relationship between other AR targets and the like;
management of the associated AR content publishing information, at least including: the identifier of the AR content, the identifier of the associated AR target, a publishing status of the AR content, a deployment rule of the AR content, an access address and an access control strategy of the AR content and the like;
management of the AR content cache strategy; and
management of local cache of the AR content.

1) The AR content/target management function 230 receives a management request of the AR content sent by the AR content server 300, performs control validation on a management authority of the AR content. If the validation passes, AR content information corresponding to the management request is updated. The management request of the AR content includes:
   an associated request of the AR content and the AR target;
   a publishing request of a status of the AR content; and
   a setting request of a deployment rule of the AR content.
2) The AR content/target management function 230 receives a search request of the AR target sent by the AR content/target selection function 210, and inquires deployment information of the AR target in AR content information according to a search condition, and returns a set of AR targets that meet the search condition.
3) The AR content/target management function 230 receives a acquisition request of the AR content sent by the AR content/target selection function 210, inquires publishing information of the AR content in AR content information according to a content identifier, and returns a corresponding AR content access address or cached AR content.
4) The AR content/target management function 230 sends a notification of an information change of the AR content to the AR content/ target selection function 210 according to an execution result of the management request of the AR content, at least including:
   a notification of a correlation change of the AR content and AR target;
   a notification of a publishing status of the AR content; and
   a notification of a change of the deployment rule of the AR content.

The AR measure processing function 240 is responsible for collecting and processing AR measure data in the mobile AR server 200, mainly including:
1) receiving AR measure data reported by the mobile AR client 120, including:
   operations of a user to an AR marker and AR content displayed on a display screen (such as selecting and viewing detailed information);
   an access history of the AR content, including: an access time, an attribute of the accessed AR content (such as the identifier of the AR content and the position of the AR target);
   adding other measure information known by the mobile AR server 200 into AR measure data reported by the mobile AR client 120, including:
      other attributes of the AR target and/or AR content corresponding to the AR measure data (such as a publishing status and a deployment rule); and
      a mobile AR user personalization preference (such as a search radius and a search category) and context (such as a user position and a terminal status) corresponding to the AR measure data;
2) receiving a user feedback reported by the mobile AR client 120, such as a score for the AR content;
3) optimizing a subsequent service by using the collected AR measure and the user feedback, such as optimizing AR content selection and filtering;
4) providing a security protection for all collected AR measure and user feedbacks (such as encryption);
5) processing the received and added AR measure data, and creating an AR measure report, including:
   creating the AR measure report based on an AR application;
   creating the AR measure report based on the AR target and/or AR content; and
   creating the AR measure report based on an AR content server; and
6) managing a subscription notification of the AR measure report, including:
   receiving a subscription request of the AR content server 300, and establishing a subscription-notification-relationship of the AR measure data; and
   receiving an unsubscribing request of the AR content server 300, and cancelling the subscription-notification-relationship of the AR measure data.

The AR personalization and context function 250 is responsible for managing the user personalization preference and user context in the mobile AR server 200, mainly including:
1) setting and management of the user personalization preference
   the user personalization preference refers to a service setting that is selected by a user in using the AR service, at least including:
   a search preference of the AR target, such as a search radius, a search category and a feature of the AR target;
   an acquisition preference of the AR content, such as a feature of the AR content;
   a push setting of the AR target and/or AR content, such as user context in the preset push condition (a user position, a terminal status);
   a push time in the preset push condition;
   a filtering preference of the AR target and/or AR content, such as performing filtering according to the type of the AR target, the category of the AR target, the feature of the AR target, the type of the AR content, the user position and the terminal capability;
   an aggregation preference of the AR target and/or AR content, such as performing aggregation according to the feature of the AR target and/or AR content (such as a direction and a position); and
   a trigger preference of a third-party value-added application, such as determining whether a trigger condition is met according to a user position, a service access time and a category of the third-party value-added application.

   The user personalization preference may be stored in the mobile AR server 200, and may also be stored in other external storage entities, such as requesting OMA Shared Preference XDMS to acquire user personalization preference setting information.
2) collection and usage of the user context
   the user context refers to current status information of a user and a terminal used by the user, including:
   a current status of the user, such as a user's geographic position and user's presence information; and
   a status of the mobile AR terminal 100, such as a screen size, a remaining electric quantity, a storage space, and a media playing capability.

The user context is usually updated dynamically, which can be reported to the mobile AR server 200 by the mobile AR client 120, and can also be acquired by requesting other external support function entities, such as requesting an OMA Presence server or an OMADPE server to acquire the user context.

After update of the user context is received by the AR personalization and context management function 250, the AR personalization and context management function 250 will determine, according to setting of the push preference of the AR target and/or AR content in the user personalization preference, whether to initiate a push process of the AR target and/or AR content. If yes, a request of pushing the AR target and/or AR content is sent to the AR content/target selection function 210. The request includes a search condition of the AR target or an acquisition condition of the AR content set in the push preference of the AR target and/or AR content.

The AR content server 300 is a functional entity deployed on a network side by the AR content provider, and provides AR content (including multimedia information such as words, images, audios and videos) associated with the AR target (such as an POI) pushed in the mobile AR server 200.

In order to better implement the mobile AR service, a mobile AR system of the disclosure further includes the following functional entities: a support service server 400 and a third-party value-added application server 500.

The support service server 400 is configured to provide server-side capability implementation of a support service required for implementation of the mobile AR service, including the following functional entities:
a device management server, providing a terminal management service for a user mobile AR terminal;
an XDM server, storing a user AR service preference and receiving an inquiry of a mobile AR server;
a presence server, sending a notification of a change of presence information related to a status of the user AR service to the mobile AR server; and
a charging server, receiving charging information reported by the AR server, and providing a basis for charging.

The third-party value-added application server 500 is configured to provide a third -party value-added service for an AR user, and includes the following functional entities:
an AR advertisement application, an AR game application, an AR social application, etc.

In addition, the mobile AR system of the disclosure also relates to some communication interfaces between the various functional entities, which are elaborated as follows.

A first interface (MobAR-1) is an interface that the mobile AR client opens to the AR application, and supports the following functions.

The AR application implements the following functions via the MobAR-1 interface:
accessing the AR content provided by the mobile AR client, including: acquiring the AR content based on a position, or acquiring the AR content based on feature matching of the AR target; and
accessing other AR service functions provided by the mobile AR client, including: feature recognition of the AR target, search and track of the AR target, presence of the AR content, storage of the AR content, report of the AR measure and the like.

A second interface (MobAR-2) is an interface that the mobile AR server opens to the mobile AR client, and supports the following functions.

The mobile AR server implements the following functions by the MobAR-2 interface:
receiving an AR target search request of the mobile AR client, and returning a response;
receiving an AR content acquisition request (PULL) of the mobile AR client, and returning a response;
receiving an AR measure report request of the mobile AR client, and returning a response; and
informing the mobile AR client to cancel some AR contents locally cached.

The mobile AR client implements the following functions by the MobAR-2 interface: requesting to find the AR target, requesting to acquire the AR content, and requesting to report the AR measure.

A third interface (MobAR-3) is an interface opening to the mobile AR server by the mobile AR client, and supports the following functions.

The mobile AR client implements, through the MobAR-3 interface, a function: receiving the AR content (or target) (PUSH) pushed by the mobile AR server; and
the mobile AR server implements, through the MobAR-3 interface, functions: pushing (unicasting) the AR content (or target) to the mobile AR client; pushing (unicasting) an acquisition notification of the AR content (or target) to the mobile AR client; and pushing broadcasting AR content (or target) to the mobile AR client.

A fourth interface (MobAR-4) is an interface open to the AR content server by the mobile AR server, and supports the following functions.

The mobile AR server implements, through the MobAR-4 interface, a function: receiving an AR content management request sent by the AR content server, in which the AR content management request includes: a request of associating AR content with an AR target, a request of publishing a status of the AR content, a request of setting a deployment rule of the AR content, a request of subscribing the AR measure and the like; and
the AR content server implements, through the MobAR-4 interface, a function: sending an AR content management request to the mobile AR server.

Fig. 4 is a schematic diagram of a composition structure of the AR content/target selection function 210 of the disclosure. As shown in Fig. 4, the AR content/target selection function 210 includes the following processing units: an AR target search unit 211, an AR content acquisition unit 212, an AR content/target filter unit 213 and an AR content/target aggregation unit 214.

The AR target search unit 211 is responsible for processing search service logic performances of the AR target according to an AR target search request of the mobile AR client 120 and an AR target push request of the AR personalization and context function 230, including:
extracting an AR target matching parameter included in the request;
inquiring a user personalization preference and current context in the AR personalization and context function 250; and
generating an AR target search condition, sending an AR target search request to the AR content/target management function 230, and receiving a search result.

If the AR target matching parameters are user position information and the user AR personalization and context allow to simultaneously acquire AR content corresponding to a target that is relatively close to a user terminal position in the found AR target, then the AR target search unit 211 sends, to the AR content acquisition unit 212, an AR content acquisition request corresponding to an AR target that is close to the user current position.

The AR content acquisition unit 212 is responsible for processing performance of the AR content acquisition, selecting service logics according to an AR content acquisition request of the mobile AR client 120 and an AR content push request of the AR personalization and context function 230, including:
extracting an AR content acquisition parameter included in the request;
inquiring a user personalization preference and current context in the AR personalization and context function 250;
inquiring AR content publishing information of the AR content/target management function 230; and
acquiring the AR content by the local cache of the AR content/target management function 230, or sending an AR content acquisition request to the AR content server 300 to acquire the AR content.

The AR content/target filter unit 213 is responsible for filtering AR targets searched by AR target search unit 211 and AR content selected and acquired by the AR content acquisition unit 212 based on the user AR personalization and context.

The AR content/target aggregation unit 214 is responsible for performing AR target and/or AR content aggregation processing according to own features of the acquired AR target and/or AR content and the user AR personalization and context, and returning the processed result to the AR content delivery unit 220;

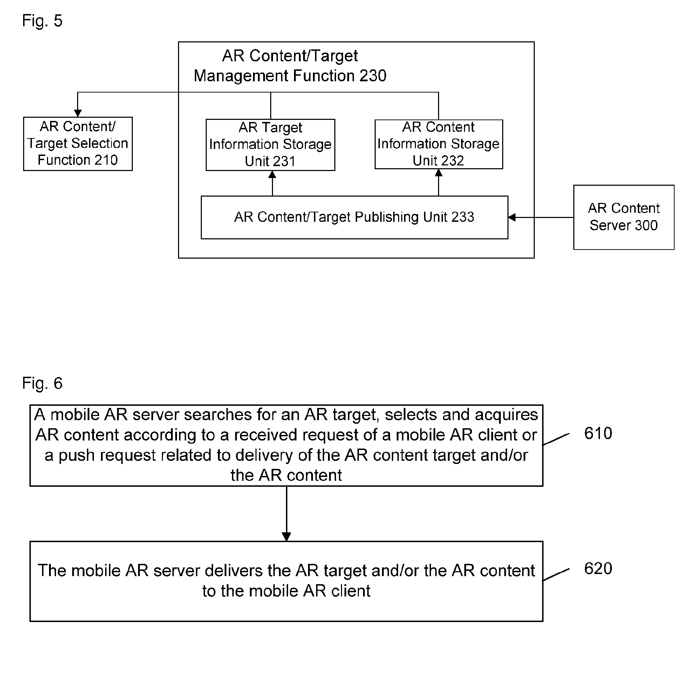

Fig. 5 is a schematic diagram of a composition structure of an AR content/target management function 230 of the disclosure. As shown in Fig. 5, the AR content/target management function 230 includes the following processing units: an AR target-information storage unit 231, an AR content information storage unit 232 and an AR content publishing unit 233.

The AR target-information storage unit 231 is responsible for storing AR target deployment information, and receiving an inquiry request of an AR content/target selection function 210. The AR target-information storage unit 231 supports different types of AR targets, including: Points of Interest (POIs), people, buildings, natural scenes (mountains, rivers), etc.

The stored AR target deployment information includes:
1) attributes of AR targets, including: a geographic position, a name, an identifier, a category, and metadata (creation time, author, visible or not) of the AR target, and relationship between AR targets, etc.;
2) attributes of associated AR contents, including: a name, and an identifier of the AR content, etc.; and
3) a measure access control list of AR targets, including: an identifier of a valid recipient of the AR target measure report notification.

The AR content information storage unit 232 is responsible for storing AR content publishing information and receiving an inquiry request of the AR content/target selection function 210. The AR content information storage unit 232 supports different types of AR contents, including: Points of Interest (POIs), people, buildings, natural scenes (mountains, rivers), etc.

The stored AR content publishing information includes:
1) attributes of AR contents, including: a name, an identifier, a format, a size, a publishing time, a publisher, and an access address of the AR content, etc;
2) attributes of associated AR targets, including: a name, an identifier and a category of the AR target and the like;
3) AR content deployment rules, including: a start time and a deployment duration of the AR content deployment, an association between the same AR target and different AR contents set by a user, an association between the same AR target and different AR contents set based on time, an access control rule for premium AR content, and the like; and
4) a measure access control list of the AR contents, including: an identifier of a valid recipient of the AR content measure report notification.

The AR content publishing unit 233 is responsible for receiving an AR content management request sent by an AR content server 400, performing verification of the access right control, verifying the validity of the request, identifying the type of a management request, and updating AR target deployment information in the AR target information storage unit according to the AR content management object information included in the request, and the AR content publishing information in the AR content information storage unit.

A system for implementing a mobile AR service and corresponding network elements of the mobile AR service according to the disclosure, and how to achieve interactions among various network elements to implement the mobile AR service will be elaborated below by specific example applications.

Fig. 6 is a flowchart of a method for implementing a mobile AR service according to the disclosure. As shown in Fig. 6, the method for implementing a mobile AR service according to the disclosure includes the following steps:
Step 610: A mobile AR server searches for an AR target, selects and acquires AR content according to a received request of a mobile AR client or a push request related to delivery of the AR content target and/or the AR content, the mobile AR server searches for the AR target, selects and acquires the AR content.
Step 620: The mobile AR server delivers the AR target and/or the AR content to the mobile AR client.

The essence of a technical solution of a method for implementing a mobile AR service according to the disclosure is further illustrated by specific examples below.

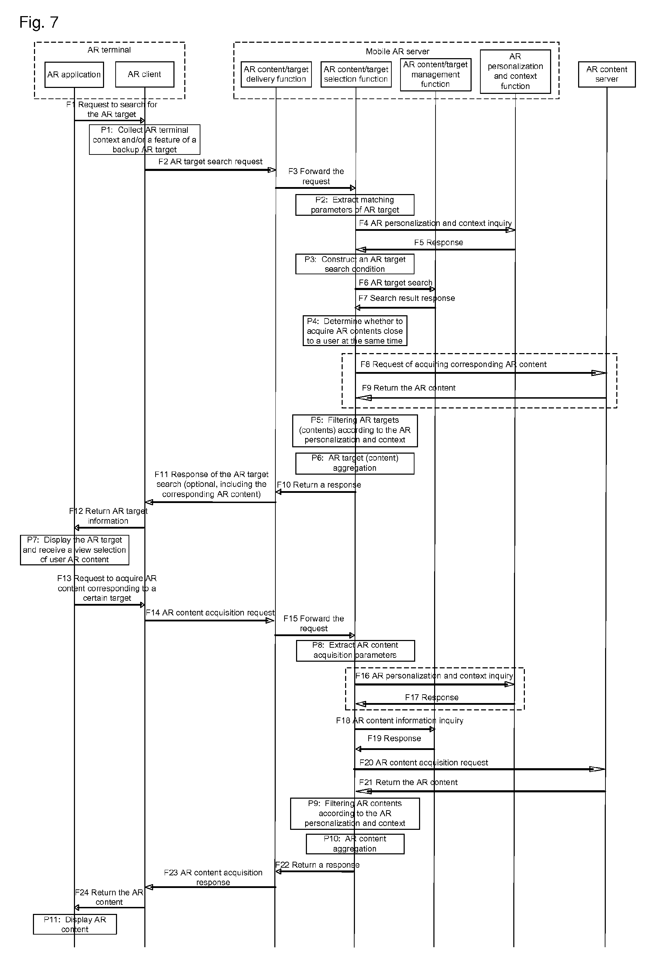

Fig. 7 is a flowchart of a method for implementing a mobile AR service according to application example 1 of the disclosure. As shown in Fig. 7, the example is a flowchart that a mobile AR server 200 implements searching for an AR target, selecting and acquiring corresponding AR content according to a request of a mobile AR client 120, i.e., a PULL mode. The method for implementing a mobile AR service according to the example includes the following steps:
Step FI: A user initiates an AR application on a mobile AR terminal, and the AR application requests a mobile AR client to find an accessible AR target.
Step F2: The mobile AR client gathers terminal context (such as latitude and longitude information) and/or features of a backup AR target (a RFID identifier, an image feature code) through the mobile AR terminal capability component, generates a AR target matching parameter, and sends an AR target search request to a mobile AR server.
Step F3: A mobile AR content/target delivery function in the mobile AR server forwards the request to an AR content/target selection function.
Steps F4-F5: The AR content/target selection function extracts the AR target matching parameters in the request (such as a position parameter of a user terminal, a feature parameter of the backup AR target), inquires an AR personalization and context function for user personalization and context information, and constructs an AR target search condition conforming to requirements of a user personalization preference and a target matching parameter.
Steps F6-F7: The AR content/target selection function sends an AR target search request to an AR content/target management function, and the AR content/target management function retrieves AR target information storage according to a target search condition, and returns the matched AR target information set;
Steps F8-F9: If the AR target matching parameters are user terminal position information, the AR content/target selection function determines, according to the AR personalization and context, whether to simultaneously acquire AR content corresponding to a target being relatively close to the position of the user terminal from the matched AR targets, so as to be cached by the mobile AR client. If yes, the AR content/target selection function and the AR content/target aggregation function further request to acquire the corresponding AR content, for example, sending an AR content acquisition request to the AR content server to acquire the corresponding AR content. If no, Steps F8-F9 are not executed;
Step F10: For the AR target and the AR content (optional) acquired by the aforementioned steps, the AR content/target selection function will also perform filtering and aggregation processes, including:
   the AR content/target selection function filters the acquired AR targets (contents) according to the AR personalization and context, for example, filtering AR targets of a specific category (advertisement category), or filtering AR contents that do not conform to a AR terminal capability (screen resolution);
   the AR content/target selection function, according to features of the AR target (content), and/or the AR personalization and context, aggregates the acquired AR targets (contents), for example, aggregating the AR targets (contents) in the same direction; and
   the AR content/target selection function returns AR targets (contents) conforming to the user AR personalization and context to the AR content/target delivery function.
Step F11: The AR content/target delivery function returns a response including the acquired AR targets (or targets and contents) to the mobile AR client; Step F12: the mobile AR client returns the AR application already found AR target metadata including an identifier, a name, a description and other information of the of AR target. In addition, the mobile AR client will also cache simultaneously acquired AR contents. The AR application may display, based on its own service logics, an AR label corresponding to the already found AR target on a terminal screen.
Step F13: The AR application requests, according to the selecting operation of the user, the mobile AR client to acquire AR content corresponding to a certain AR target.
Step F14: The mobile AR client generates, based on the selected AR targets, an AR content acquisition parameter, and sends an AR content acquisition request to the mobile AR server.
Step F15: The mobile AR content/target delivery function in the mobile AR server forwards the request to the AR content/target selection function.
Steps F16-F17: The AR content/target selection function extracts the AR content acquisition parameter in the request. Optionally, if the AR content acquisition parameter is an identifier of an associated AR target, the AR content/target selection function requests to inquire the AR personalization and context.
Steps F18-F19: The AR content/target selection function acquires the parameter according to the AR content, sends an AR content information inquiry request to the AR content/target management function to obtain an access address corresponding to the AR content. For the case of multiple AR contents corresponding to the same AR target, the AR content/target selection function will make a selection according to the AR personalization and context.
Steps F20-F21: The AR content/target selection function sends an AR content acquisition request to an AR content server providing the content according to the access address to acquire the corresponding AR content. If the requested AR content is cached locally by the AR content/target management function, then the requested AR content can be acquired directly.
Step F22: For the AR content acquired in the aforementioned steps, the AR content/target selection function will further perform filtering and polymeric processes, including:
   the AR content/target selection function filters the acquired AR contents according to the AR personalization and context, for example, filtering AR content that does not conform to the AR terminal capability (screen resolution);
   the AR content/target selection function aggregates the acquired AR contents according to features of the AR content and/or AR personalization and context, for example, aggregating the AR contents in the same direction; and
   the AR content/target selection function returns the AR contents conforming to the user AR personalization and context to the AR content/target delivery function.
Step F23: The AR content/target delivery function returns a response including the acquired AR contents to the mobile AR client.
Step F24: The mobile AR client returns the acquired AR contents to the AR application. The AR application may display the content on the terminal screen according to the service logic of the AR application.

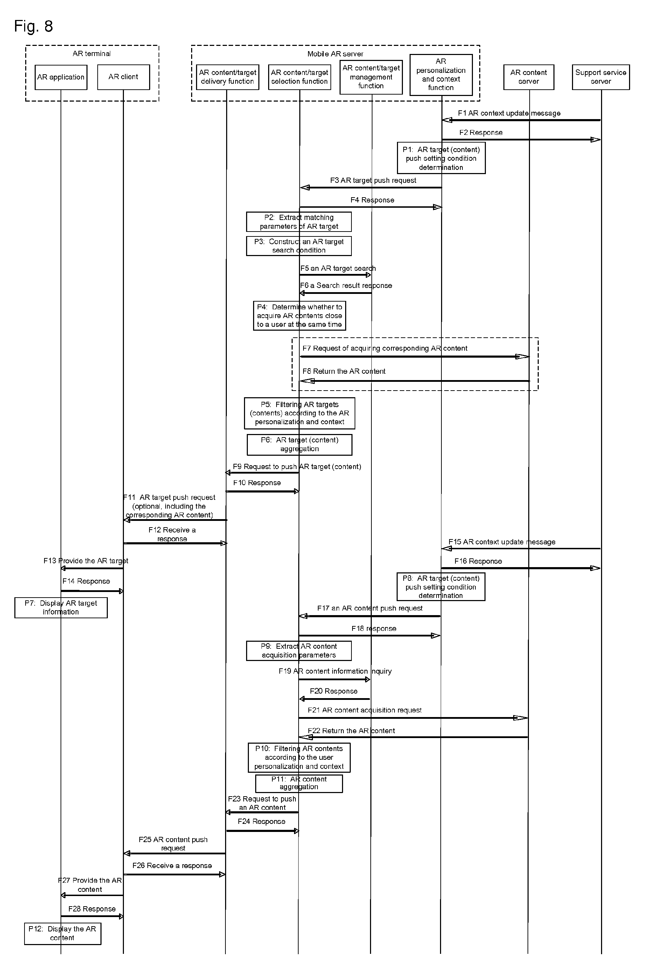

Fig. 8 is a flowchart of a method for implementing a mobile AR service according to application example 2 of the disclosure. As shown in Fig. 8, the example is a flowchart that a mobile AR server 200 implements automatically delivering an AR target and/or AR content to a mobile AR client 120 according to a push setting, i.e., a PUSH mode. The method for implementing a mobile AR service according to the example includes the following steps:
Steps F1-F2: An mobile AR server receives an update message in regard to user AR context of an external support service server, such as, user position change information (entering a specific position area) sent by a Location Based Service (LBS) server, a user terminal presence status (opening a shooting function of a camera) sent by a service presence server (Presence Server), or features of backup AR targets calculated and analyzed according to shot images of a user mobile AR terminal sent by a third-party graphic image recognition server.
Steps F3-F4: An AR personalization and context function determines, according to an AR target (content) push setting, whether to execute an AR target (content) push routine. In the embodiment, it is assumed to push an AR target according to presetting. The AR personalization and context function then extracts AR target search parameters (a user terminal position parameter, a backup AR target feature parameter) and the AR personalization and context information in the update message, and accordingly sends an AR target push request to an AR content/target selection function.
Steps F5-F6: The AR content/target selection function extracts AR target matching parameters (such as a user terminal position parameter, a backup AR target feature parameter) in the request, constructs an AR target search condition conforming to requirements of a user personalization preference and an target matching parameter, and sends an AR target search request to an AR content/target management function, which returns a set of the matched AR target information; and
the AR content management module retrieves AR target storage according to the target search parameters, and returns matched AR target metadata.
Steps F7-F8: If the AR target matching parameters are user terminal position information, the AR content/target selection function determines, according to the AR personalization and context, whether to simultaneously acquire AR content corresponding to a target being relatively close to the position of the user terminal from the matched AT targets, so as to be cached by the mobile AR client. If yes, the AR content/target selection function further requests to acquire the corresponding AR content, for example, sending an AR content acquisition request to the AR content server to acquire the corresponding AR content. If no, then Steps F7-F8 is not executed.
Steps F9-F10: For the AR target and the AR content (optionally) acquired by the aforementioned steps, the AR content/target selection function will also perform filtering and aggregation processes, including:
   the AR content/target selection function filters the acquired AR targets (contents) according to the AR personalization and context, for example, filtering AR targets of a specific category (advertisement category), or filtering AR contents that do not conform to a AR terminal capability (screen resolution);
   the AR content/target selection function, according to features of the AR target (content), and/or the AR personalization and context, aggregates the acquired AR targets (contents), for example, aggregating the AR targets (contents) in the same direction; and
   the AR content/target selection function requests an AR content/target delivery function to push the AR target (content) conforming to the user AR personalization and context to the mobile AR client.
Steps F11-F12: The AR content/target delivery function pushes the acquired AR target (or target and content) to the mobile AR client.
Steps F13-F14: The mobile AR client provides the AR application the acquired AR target information including an identifier, a name, a description and other information of the of AR target. In addition, the mobile AR client will also cache simultaneously acquired AR content. The AR applications may display, based on its own service logics, an AR label corresponding to the already found AR target on a terminal screen.
Steps F15-F18: Similar to the aforementioned steps, the mobile AR server receives an update message in regard to the user AR context of the external support service server. The AR personalization and context function makes an AR content push determination based on a push setting, and sends an AR content push request to the AR content/target selection function.
Steps F19-F22: The AR content/target selection function extracts the AR content acquisition parameter in the request. Similar to Steps F16-F21 in the application example 1, the corresponding AR content is queried and acquired. Similar AR content filtering and polymeric processes are performed.
Steps F23-F24: the AR content/target selection function requests the AR content/target deliver function to push the AR content conforming to the AR personalization and context to the mobile AR client.
Steps F25-F28: The AR content/target delivery function pushes the acquired AR content to the mobile AR client. The mobile AR client provides the acquired AR content to the AR application, and then the AR application displays the content on a terminal screen according to service logics of the AR application.

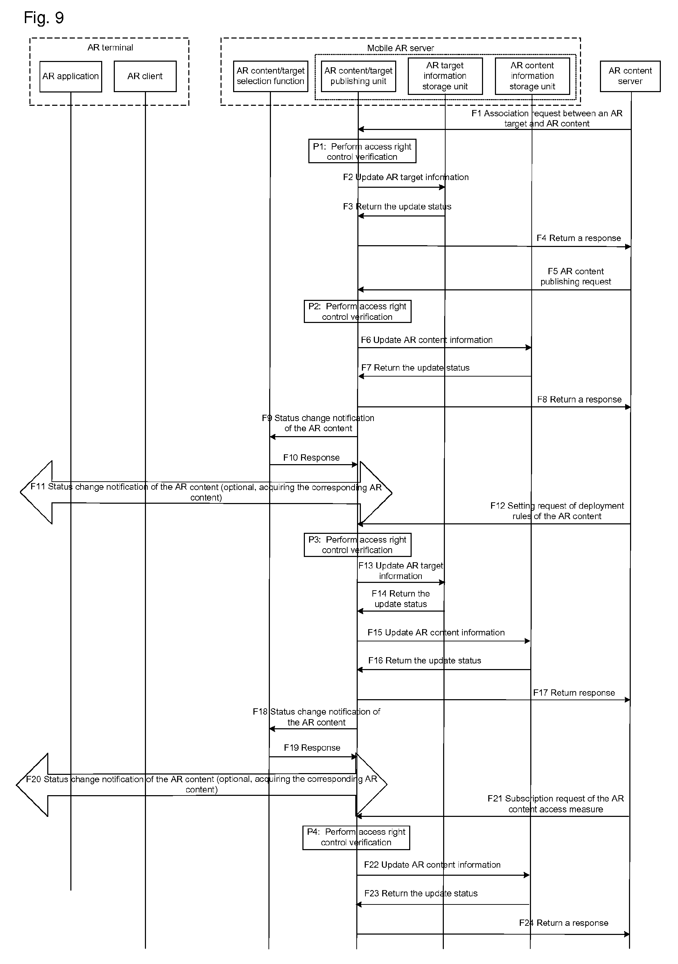

Fig. 9 is a flowchart of a method for implementing a mobile AR service according to application example 3 of the disclosure. As shown in Fig. 9, the example is a flowchart that a mobile AR server 200 implements receiving a request of an AR content server 300 to manage AR content publishing. The method for implementing a mobile AR service according to the example includes the following steps:
Step F1: The AR content server sends an AR content management request to the mobile AR server. The request includes an AR content management request type field "Type=Association", which indicates desiring to establish a relation between an AR target and AR content as well as corresponding management object information. The corresponding management object information includes: an AR target identifier "AR Target ID", an AR content identifier "AR Content ID", and a current AR content publishing status "Available" or "Unavailable".
Step F2: An AR content management module performs control on an access right of the AR content server, and determines whether the AR content server possesses management authority of associated AR content. If the validation is passed, then an AR content management function triggers an AR content publishing unit to update AR target information corresponding to the object requested to manage in an AR target information storage unit, namely, establishing the correlation between the AR target and the AR content in the request.
Steps F3-F4: The mobile AR server returns a response of the AR content management request to the AR content server.
Step F5: The AR content server sends an AR content management request to the mobile AR server. The request includes an AR content management request type field "Type=Publication", which indicates requesting to update an AR content publishing status associated with the AR target, and corresponding management object information. The corresponding management object information includes: AR target identifier "AR Target ID", an AR content identifier "AR Content ID", and a current AR content publishing status "Available" or "Unavailable".
Step F6: The AR content management module performs control on an access right of the AR content server, and determines whether the AR content server possesses management authority of associated AR content. If the validation is passed, the AR content management function then triggers the AR content publishing unit to update AR content information corresponding to the object requested to manage in the AR content storage unit, namely, updating the AR content publishing status in the request.
Steps F7-F8: The mobile AR server returns a response of the AR content management request to the AR content server.
Steps F9-F10: An AR content/target management function sends a change notification of the AR content publishing status to an AR content/target selection function. The change notification of the AR content publishing status includes a related AR target identifier, AR content identifier, AR content present delivery status, access address and the like. ;
Step F11: The AR content/target selection function sends the change notification of the AR content publishing status to a related user mobile AR client according to the AR personalization and context. The change notification may be sent to a mobile AR client corresponding to the already found AR target, and may also be sent to the mobile AR client by which the AR content is already acquired. The corresponding AR target identifier, AR content identifier, currently publishing status of the AR content, access address and the like are included in the notification.
   The mobile AR client executes a corresponding AR service control flow according to the received notification, including:
   if the AR content publishing status becomes unavailable, then a prompt message is displayed in an AR target display label, or locally cached AR content are cancelled; and
   if AR content associated with a certain AR target changes, then a prompt message is displayed in the AR target display label, or the changed AR content are requested to acquire.
Step F12: The AR content server sends an AR content management request to the mobile AR server. The request includes an AR content management request type field "Type=Deployment", which indicates desiring to set an AR content deployment rule and corresponding management object information. The corresponding management object information includes: an AR target identifier "AR Target ID", an AR content identifier "AR Content ID", and a control rule associated with an AR content deployment access. AR content deployment rules at least includes: a start time "Start time" and a deployment duration "duration" of the AR content deployment, an association "association based on user" between the same AR target with different AR contents set by a user, an associations "association based on time" between the same AR target with different AR contents set based on time, and an access control rule "Access control to premium content" directed to premium AR content.
Steps F13 -F16: The AR content management module performs control on an access authority of the AR content server, and determines whether the AR content server has an authority of managing associated AR content. If the validation is passed, the AR content management function triggers the AR content publishing unit to simultaneously update AR target information corresponding to the object requested to manage in the AR target information storage unit and AR content information corresponding to the object requested to manage in the AR content information storage unit, namely, establishing the AR content deployment rule in the request.
Step F17: The mobile AR server returns a response of the AR content management request to the AR content server.
Steps F18-F19: The AR content/target management function sends a change notification of the AR content deployment rule to the AR content/target selection function. The notification includes a related AR target identifier, AR content identifier, AR content deployment rule and the like.
Step F20: The AR content/target selection function sends the change notification of the AR content deployment rule to the user mobile AR client based on the AR personalization and context. The mobile AR client executes a corresponding AR service control flow based on the received notification.
Step F21: The AR content server sends an AR content management request to the mobile AR server. The request includes an AR content management request type "Type=Subscription" or "Type=Unsubscribe", which indicates desiring to subscribe or unsubscribe a measure report notification related to the AR target and/or AR content, and corresponding management object information. The corresponding management object information includes: an AR target identifier "AR Target ID", an AR content identifier "AR Content ID", and a subscription duration "duration".
Steps F22 -F23: The AR content management module performs control on an access authority of the AR content server, and determines whether the AR content server has an authority of managing associated AR content. If the validation is passed, the AR content management function triggers the AR content publishing unit to update AR target information corresponding to the object requested to manage in the AR target information storage, namely, adding or deleting the object of the AR target and/or AR content measure report notification.
Step F24: The mobile AR server returns a response of the AR content management request to the AR content server.

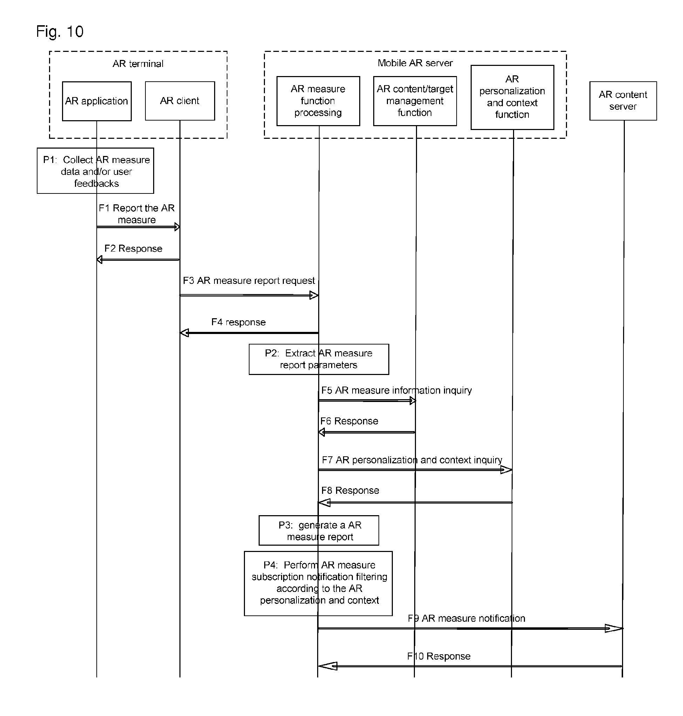

Fig. 10 is a flowchart of a method for implementing a mobile AR service according to application example 4 of the disclosure. As shown in Fig. 10, the example is a flowchart that a mobile AR server 200 implements receiving an AR measure report of a mobile AR client 120. The method for implementing a mobile AR service according to the example includes the following steps:
Steps F1-F2: An AR application constructs, according to feedback information of a user using an AR service, to generate AR measure data (AR Metrics data), including: an AR label that the user selects to operate, a user AR content access history (such as an access time, an AR target position, an identifier corresponding to AR content and the like), and a user feedback (for example, for evaluation on a particular AR content, the AR application reports the AR measure data and a user feedback to a mobile AR client).
Steps F3-F4: The mobile AR client sends an AR measure report request to a mobile AR server, and an AR measure processing function extracts an AR measure report parameter.
Steps F5-F6: An AR measure processing function sends an inquiry request to an AR content/target manage function according to the measure report parameter, and acquires AR measure supplementary information (including an identifier, type, description and the like of an AR measure target (content)) and AR measure processing information (including a subscription notification list of a AR measure report, i.e., a legitimate recipient address for the AR measure report).
Steps F7-F8: The AR measure processing function sends an inquiry request to an AR personalization and context function according to the measure report parameter to acquire the AR measure supplemental information (including a user personalization setting, and current context) and AR measure processing information (including a privacy protection setting of AR measure data and the like).
Steps F9-F10: The AR measure processing function generates an AR measure report according to the acquired AR measure supplementary information, and filters the address of the report recipient and AR measure data which do not conform to the user preference and the service setting. The AR measure processing function sends an AR measure report notification to a legitimate AR content server.

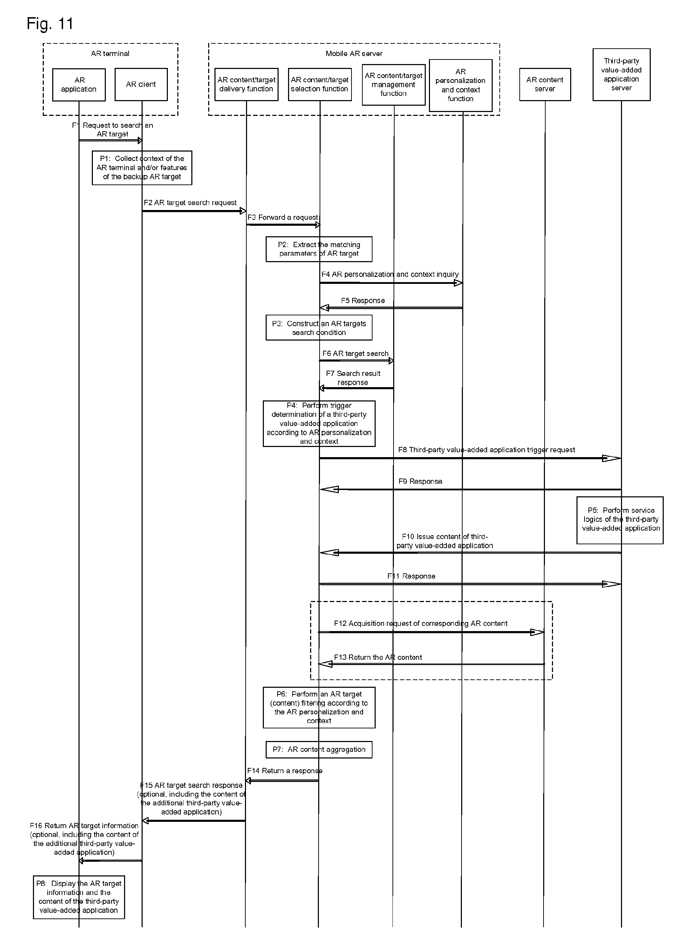

Fig. 11 is a flowchart of a method for implementing the mobile AR service according to application example 5 of the disclosure. As shown in Fig. 11, the example is a flowchart that a mobile AR server 200 implements triggering a third-party value-added application service. The method for implementing a mobile AR service according to the example includes the following steps.

In the disclosure, the third-party value-added application service provider may provide a mobile AR user with additional value-added application services (including a multimedia advertisement, a public safety guide, a social network service and the like) by a cooperation agreement made with the mobile AR service provider.
Steps F1-F7 refer to corresponding Steps F1-F7 of the application example shown in Fig. 10.
Steps F8-F9: The AR content/target selection function determines whether to additionally provide a third-party value-added application in accordance with AR target search parameters and AR personalization and context. The determination conditions include: whether user's AR target search parameters (such as user's geographic position information, backup AR target features, etc.) conform to a trigger condition of the third-party value-added application, and whether the user AR personalization and context allows the mobile AR server to automatically trigger the third-party value-added application.

If it is determined that the third-party value-added application needs to be triggered, the AR content/target selection function sends a trigger request including an AR target search parameter and/or an user identifier to a corresponding third-party value-added application server.
Steps F10 to F11: The third party value-added application server selects to perform a corresponding service logic in accordance with the AR target search parameter and/or the user identifier included in the trigger request, so as to provide additional value-added application information for the user, for example, selecting advertisement content conforming to the user's current position, or searching for social network information associated with the user. The third-party value-added application server returns the acquired content or content identifier of the third-party value-added application to the mobile AR server.
Steps F12-F13: Optionally, if the third-party value-added application server returns the content identifier, the AR content/target selection function sends, according to the content identifier, a request of acquiring the content of the third-party value-added application to the AR content server or other content storage entities to acquire corresponding content.
Step F14: The AR content/target selection function filters and aggregates the acquired AR target (content) and the acquired content of the third party value-added application according to the AR personalization and context, and returns them to an AR content/target delivery function.
Step F15: The AR content/target delivery function returns, to a mobile AR client, a response including the acquired target (or content, optional) and the acquired content of the third party value-added application.
Step F16: The mobile AR client returns the already found AR target and the already found content of the third party value-added application to the AR application client, and the already found AR target and the already found content of the third party value-added application are displayed on a terminal screen.

The above are only preferred embodiments of the disclosure, which are not intended to limit the scope of the disclosure.

### Industrial Applicability

The technical solution of the disclosure provides an underlying capability support for an AR service by developing an open API for an AR application, thus reducing the development difficulty of the AR application. The method for implementing a mobile AR service of the disclosure adapts to recognition of different types of AR targets and acquisition of AR contents, has desirable expansibility, and provides a uniform service experience for users in different application scenarios.

## Claims

1. A method for implementing a mobile Augmented Reality (AR) service, comprising:
searching, by a mobile AR server, for an AR target, selecting and acquiring AR content according to a request received from a mobile AR client or a received push request related to delivery of the AR target and/or the AR content; and
delivering, by the mobile AR server, the AR target and/or the AR content to the mobile AR client.

2. The method according to claim 1, wherein the searching, by a mobile AR server, for an AR target comprises:
searching for the AR target according to a parameter in the request of the mobile AR client or the push request, and/or user AR personalization and context.

3. The method according to claim 1 or 2, wherein the selecting and acquiring AR content comprises:
searching for the AR target, and acquiring AR content corresponding to the AR target simultaneously.

4. The method according to claim 1 or 2, further comprising:
searching, by the mobile AR server, for the AR target based on at least one of followings: a user position, a user setting and a feature of the AR target, wherein the user setting at lease comprises a search radius and/or a search category of the AR target.

5. The method according to claim 1, wherein the selecting and acquiring AR content by the mobile AR server comprises:
searching for and acquiring the AR content according to a parameter in the request of the mobile AR client or the push request, and/or user AR personalization and context.

6. The method according to claim 1 or 5, further comprising:
selecting, by the mobile AR server, and acquiring the AR content based on at least one of followings: an identifier of the AR content, a feature of the AR content, an identifier of the AR target, a user terminal capability, a deployment rule of the AR content and a strategy for controlling access of the AR content.

7. The method according to claim 1, wherein the selecting and acquiring AR content by the mobile AR server comprises:
acquiring, by the mobile AR server, the AR content from an AR content server, or acquiring, by the mobile AR server, the AR content from a local cache.

8. The method according to claim 1, wherein the receiving a push request related to delivery of the target and/or the AR content comprises:
receiving, by the mobile AR server, the push request related to delivery of the AR target and/or the AR content according to a push setting of the AR target and/or the AR content.

9. The method according to claim 8, wherein the push setting of the AR target and/or the AR content comprises:
a user context, wherein the user context comprises: a user position, a terminal present status; and/or a preset push time interval.

10. The method according to claim 1, further comprising:
filtering, by the mobile AR server, the AR target and/or the AR content according to user AR personalization and context.

11. The method according to claim 10, wherein the user AR personalization and context comprises at least one of followings:
a type of the AR target, a category of the AR target, a feature of the AR target, a type of the AR content, a user position and a terminal capability.

12. The method according to claim 1, further comprising:
aggregating, by the mobile AR server, the AR target and/or the AR content according to at least one of followings:
a position of the AR target and/or the AR content position, a direction of the AR target and/or the AR content direction, and a correlation between AR targets or between AR contents.

13. The method according to claim 1, further comprising:
triggering, by the mobile AR server, according to user AR personalization and context, a service logic of a third-party application server to acquire an additional service content of a third-party value-added application, wherein
the user AR personalization and context comprises at least one of followings:
a user position, a service access time and a service category of the third-party value-added application.

14. The method according to claim 1, further comprising:
instructing, by the mobile AR server, the mobile AR client to cancel or replace an AR target and/or AR content previously acquired.

15. The method according to claim 14, further comprising:
issuing the instruction in response to the request of the mobile AR client or the push request sent to the mobile AR client; and
sending, by the mobile AR server, a request of cancelling or replacing the AR target and/or the AR content previously acquired to the mobile AR client according to a request of an AR content server.

16. The method according to claim 1, wherein the delivering, by the mobile AR server, the AR target and/or the AR content to the mobile AR client comprises:
returning the AR target and/or the AR content in response to the request of the mobile AR client; or
actively pushing the AR target and/or the AR content to the mobile AR client.

17. The method according to claim 16, comprising:
selecting and delivering, by the mobile AR server, following information to the mobile AR client:
the AR target and/or the AR content;
a reference of the AR target and/or the AR content; and
a no-information instruction.

18. The method according to claim 1, further comprising:
pausing or resuming, by the mobile AR server, the delivery of the AR target and/or the AR content to the mobile AR client according to user AR personalization and context, wherein
the user AR personalization and context at least comprises one of followings:
a status change of a user terminal, and a position change of a user.

19. The method according to claim 1, further comprising:
receiving, by the mobile AR server, an AR content management request from an AR content server, and updating AR target information and/or AR content information corresponding to the AR content management request.

20. The method according to claim 19, wherein the AR content management request at least comprises:
a request of managing association between the AR target and AR content, or a request of managing publishing of the AR content, or a request of managing a deployment rule of the AR content, or a request of notifying subscription of an AR measure report.

21. The method according to claim 1, further comprising:
receiving, by the mobile AR server, AR measure data and a user feedback reported by the mobile AR client, and creating an AR measure report; and
sending, by the mobile AR server, the AR measure report to an AR content server according to a subscription-notification-relation of the AR measure report, as well as user AR personalization and context.

22. A mobile Augmented Reality (AR) server, comprising:
an AR content/target selection function, configured to: search for an AR target, select and acquire AR content according to a request received from a mobile AR client or a push request related to delivery of the AR target and/or the AR content;
an AR content/target delivery function, configured to:
in responding to the request of the mobile AR client, deliver the AR content and/or the AR target to the mobile AR client; or
initiate a request of delivering the AR target and/or the AR content to the mobile AR client;
an AR content/target management function, configured to store and manage deployment information of the AR target, publish information of the AR content, a caching strategy of the AR content and the AR content cached in the mobile AR client;
an AR measure processing function, configured to: collect AR measure data from the mobile AR client and interactions between a user and the AR content, add known information of the mobile AR server into the collected AR measure data, and process the AR measure data and other related data to generate an integrated report; and
an AR personalization and context management function, configured to collect and manage a user personalization preference and user context information.

23. The mobile AR server according to claim 22, further comprising: a fourth interface provided to the AR content server; and
the mobile AR server provides the AR content through the fourth interface, and accesses functions opened by the mobile AR server, wherein the functions comprise: requesting for association/disassociation between the AR content and the AR target, requesting to publish an accessible status of the AR content, setting a deployment rule of the AR content, accessing an anonymous feedback related to user interaction and AR measure.

24. A mobile Augmented Reality (AR) terminal, comprising a terminal capability component, a mobile AR client, an AR application and a support service client, wherein the mobile AR client is configured to: access user/terminal personalization and context information, request the mobile AR server to search for an AR target, select and acquire AR content, and control a fusion display of the AR target and/or the AR content with a real scene shot by the terminal capability component.

25. The mobile AR client according to claim 24, further comprising:
an AR content/target acquisition function, configured to request the mobile AR server to acquire the AR content and/or the AR target according to a request of the AR application;
an AR content/target display function, configured to provide an AR content display mechanism according to the request of the AR application;
a user interaction support function, configured to support interaction of a user with the AR target and related AR content on a display screen of a terminal;
an AR measure processing function, configured to: collect the interactions between the user and the AR content, as well as a user feedback on the AR content, and report AR measure data and the user feedback to the mobile AR server; and
a user/terminal data management function, configured to collect and manage information related to a user AR service setting and a terminal status.

26. The mobile AR terminal according to claim 24, wherein a first interface is further provided between the mobile AR client and the AR application; and
the first interface is configured to: access the AR target and/or the AR content provided by the mobile AR client, and access other AR service functions provided by the mobile AR client, wherein the other AR service functions at least comprise: reporting AR measure data to the mobile AR client.

27. The mobile AR terminal according to claim 24, wherein a second interface is provided between the mobile AR client and the mobile AR server;
the mobile AR server, through the second interface,
receives a request of searching for the AR target from the mobile AR client, and returns a response to the mobile AR client;
receives a request of acquiring the AR content from the mobile AR client, and returns a response to the mobile AR client;
receives a request of reporting an AR measure and a user feedback from the mobile AR client, and returns a response to the mobile AR client;
receives a request of setting or updating a user preference from the mobile AR client, and returns a response to the mobile AR client; and
informs the mobile AR client to cancel AR content locally cached in the mobile AR client; and
the mobile AR client, through the second interface,
requests the mobile AR server to find the AR target, requests the mobile AR server to acquire the AR content, requests to set or update a user preference setting, and requests to report the AR measure and the user feedback to the mobile AR server.

28. The mobile AR terminal according to claim 24, wherein a third interface is provided between the mobile AR client and the mobile AR server;
the mobile AR client receives, through the third interface, the AR content and/or the AR target pushed by the mobile AR server; and
the mobile AR server, through the third interface, directly pushes the AR content and/or the AR target to the mobile AR client, or pushes a notification of indirectly acquiring the AR content and/or the AR target to the mobile AR client.

29. A mobile Augmented Reality (AR) system, comprising:
a mobile AR client, configured to: access a user terminal capability, request a mobile AR server to search for the AR target, acquire the AR content, and control display of the AR target and/or the AR content;
a mobile AR server, configured to: search for the AR target according to a request received from the mobile AR client or a push request related to delivery of the AR target and/or the AR content, select and acquire the AR content, and deliver the AR target and/or the AR content to the mobile AR client; and
an AR content server, configured to provide storage and management of the AR content.

30. The mobile AR system according to claim 29, wherein that the mobile AR server searches for the AR target, and selects and acquires the AR content comprises:
the mobile AR server filters the AR target and/or the AR content; and/or
the mobile AR server aggregates the AR target and/or the AR content.

31. The mobile AR system according to claim 29, wherein the mobile AR server is further configured to:
provide AR content publishing management for the AR content server; and
provide an AR measure processing report to the mobile AR client.
